(19) Europäisches Patentamt
European Patent Office
Office européen des brevets

(11) EP 3 071 956 B1

(12) EUROPEAN PATENT SPECIFICATION

(45) Date of publication and mention
of the grant of the patent:
**10.11.2021 Bulletin 2021/45**

(51) Int Cl.:
*G01S 13/88* (2006.01)    *G01S 13/87* (2006.01)
*G01S 13/89* (2006.01)    *G01S 13/00* (2006.01)
*G07C 9/15* (2020.01)    *E05G 5/00* (2006.01)

(21) Application number: **14864707.6**

(22) Date of filing: **17.11.2014**

(86) International application number:
**PCT/US2014/065883**

(87) International publication number:
**WO 2015/077169 (28.05.2015 Gazette 2015/21)**

(54) **STANDOFF DETECTION AND ANALYSIS OF OBJECTS**

FERNDETEKTION UND -ANALYSE VON OBJEKTEN

DÉTECTION ET ANALYSE D'OBJETS À DISTANCE DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2013 US 201361905940 P
22.01.2014 US 201414160895
28.02.2014 US 201461945921 P
23.04.2014 US 201414259603
30.06.2014 US 201414319222**

(43) Date of publication of application:
**28.09.2016 Bulletin 2016/39**

(73) Proprietor: **APSTEC SYSTEMS LTD
Iklin, Malta IKL 1200 (MT)**

(72) Inventors:
• **KUZNETSOV, Andrey
St. Petersburg 194223 (RU)**
• **AVERYANOV, Valery
St. Petersburg 195221 (RU)**
• **VOROBYEV, Stanislav
St. Petersburg 196140 (RU)**
• **GORSHKOV, Lgor
St. Petersburg 199178 (RU)**

(74) Representative: **Lederer & Keller Patentanwälte
Partnerschaft mbB
Unsöldstraße 2
80538 München (DE)**

(56) References cited:
**EP-A1- 2 505 995        GB-A- 2 458 465
US-A1- 2013 022 237    US-A1- 2013 033 574
US-B2- 7 684 846**

**Description**

FIELD OF THE INVENTION

This invention relates to methods for standoff detection of objects and measurement of the dielectric characteristics of such objects in real time. In particular, it relates to methods for detection of explosives hidden on the human body, in hand luggage, and in backpacks.

BACKGROUND OF THE INVENTION

The detection of so-called "suicide bombers", who carry bombs on their body and activate them immediately at the slightest sign of a security response, continues to be a largely important security issue today.

At present, metal detectors are used, as well as various types of gas trace detectors, X-ray machines and specially-trained dogs. Currently, developed detection approaches in various countries include detectors that are based on the following principles: NQR effect, Raman backscattering, dielectric portals, passive and active devices for human body inspection (terahertz frequencies), passive radars (millimeter frequencies) and active microwave portals.

US 2013/0033574 A1 describes a method and a system for unveiling a hidden dielectric object, in particular for detection of dielectric explosive substances concealed under clothes on the human body.

Modern inspection methods and devices continue to lack important features: they don't provide standoff covert inspection (i.e., they cannot detect a "suicide bomber" in real time or perform counteractions against him before he activates an explosive); they cannot automatically determine the danger/risk level of the detected object and have a very high false alarm rate, which limits use in real conditions, e.g., in a moving crowd.

The prior art, in general, lacks at least half of the following features: Standoff inspection; automatic inspection; real time inspection; covert inspection; environmental independence; safety for human health; possibility to associate an alarm signal with a certain person; mobility; and relatively low cost.

The present invention provides for a method for standoff detection of objects based on measuring a thickness of said object and further calculating a dielectric permittivity value; comparing said dielectric permittivity value to a database of reference dielectric permittivity values, so as to determine to which preselected group of objects the object belongs and whether the object belongs to a preselected group of dangerous objects. Goods stolen from a supermarket can e.g. form a preselected group of objects. A preselected group of dangerous objects could in particular be formed by a group of explosive materials or a group of improvised explosive devices (IED).

A variety of methods exist for measuring a complex dielectric permittivity value of solid materials using high frequency techniques. Methods employing microwave frequency ranges are based on electromagnetic wave propagation in a medium or wave processes on the borders of two media. All known methods are based on registration of the phase change when the microwave passes through the dielectric object. These methods operate by linking the phase change value to the value of the dielectric permittivity of the target material. These connections can vary in each particular case, thus explaining the variety of measurement methods used to determine a material's complex dielectric constant ($\varepsilon = \varepsilon'$ $+ \varepsilon''$) and dissipation factor ($\tan(\delta) = \varepsilon''/ \varepsilon'$), wherein $\varepsilon'$ and $\varepsilon''$ are the real and imaginary parts of the dielectric constant, respectively.

Several methods exist for measuring the dielectric constant of material based on the analysis of a signal at high or super-high frequencies:

(1) Methods which use directional waves: waveguide methods with coaxial line and rectangular waveguides; using one of the most common waveguide methods-the short-circuit method-one determines characteristics of a dielectric sample located at the shorter end of the waveguide according to the phase and coefficient of a wave moving along the line.
(2) Resonant methods, which measure resonance frequencies and quality factors.
(3) Methods which use waves in free space, e.g., based on measuring the coefficients of reflection and transmission, i.e., quasi-optic methods used to measure parameters in free space.

The choice of a method to be used is determined by the type of measurements (laboratory researches, industrial nondestructive control, etc.), frequency range, and a material's characteristics. The main disadvantage of the second and third methods above (2, 3) is their incompatibility with odd or abnormally shaped objects. Such methods are capable of producing measured samples of materials having two plane surfaces (e.g., rectangular). Due to the variety of shapes of dangerous dielectric objects today, existing methods must be improved to carry out standoff inspection of a monitored space and determine the dielectric characteristics of all objects, including those that are irregularly-shaped.

Additionally, methods using directional waves (1, above) and resonant methods (2, above) are the most accurate methods in the decimeter and centimeter wave range; however, they require using a samples fitting waveguide or a resonator line cross-section.

A method to measure a dielectric constant is described in Russian Federation, RF, Patent No. 2418269, "Method and device for tomographic measurements of multi-phase flow." This disclosed method is based on the irradiation of a dielectric multi-phase liquid medium (gas-liquid mixture), located inside a Venturi tube, with microwave electromagnetic radiation, further comprising recording and analysis of the transmitted field. The complex dielectric constant is determined by measuring the phase constant and the attenuation rate of a plane electromagnetic wave propagating inside the Venturi tube. The method comprises measuring the difference between phases of electromagnetic waves for two receiving antennas, placed within the tube at different distances from a third, transmitting antenna. The phase is measured at two or more frequencies, within the range of 1 MHz and 10 GHz. The attenuation rate is measured similar to the phase constant of the propagating wave, except that, instead of phase difference, the dissipation difference is estimated.

The disadvantages of the above method include the following: (1) the requirement to use at least 3 antennas (1 transmitting and 2 receiving antennas); (2) the requirement to use a dielectric liquid in a special Venturi tube, thus not allowing for measurements of solid objects or covert standoff inspection and detection; (3) the receiving antenna is located close to the transmitting antenna, thus the model of plane wave propagation must be corrected considering (a) dependence between the distance between receiving antennas and the length of the wave received by them, and (b) the weak dependence between this distance and the conductivity of the required multi-phase liquid medium (additional dependencies into the algorithm makes required calculations more complex and time-consuming); (4) the method is only useful under laboratory conditions (e.g., detection of planar/simple objects).

## SUMMARY OF THE INVENTION

The invention is defined in method claim 1 and in corresponding apparatus claim 14. Disclosed herein is a method for detecting and analyzing an object in a monitored area comprising emitting an electromagnetic/microwave (EM/MW) signal via one transmitter through the monitored area, the signal travelling through the monitored area and through any object along its path towards one receiver located at a distance opposite of said one transmitter, the receiver detecting an amplitude and a phase (complex amplitude) of a received EM/MW signal, the receiver further performing a first processing of the signal to determine whether said amplitude is above a preset amplitude threshold, and further performing a second processing of the signal if the preset amplitude threshold is met. The second processing comprises determining a shift in a length of an optical path of said EM/MW signal, compared to an optical path of the same signal through free space, wherein the shift occurs due to the signal transmitting through an object. This data regarding the shift is then sent to a processor. Also measured is the thickness (t) of said object, using any known or disclosed methods, which is also sent to said processor. The thickness (t) of the object is measured in direction of a straight line between said transmitter and said receiver. The processor further calculates a dielectric permittivity value ($\varepsilon$) of said object via a relationship of said shift equating to $(t*(\sqrt{\varepsilon}-1))$, and the processor compares the object's dielectric permittivity value to a database of reference dielectric permittivity values, in order to determine to which preselected group of objects the said object belongs and whether the object belongs to a preselected group of dangerous objects.

In some aspects, the shift in the length of the optical path is calculated by a Fourier transform of the relation between a signal's complex amplitudes in the presence of the object within the inspected area of space and the signal's complex amplitudes in the absence of the object within the inspected area of space.

In some aspects, many space distributed EM/MW signals may be combined to form a real time distribution map of dielectric permittivity value data.

In some aspects, the method further comprises sending a confirmation or alarm signal in the presence of an object belonging to a particular preselected group of dangerous or non-dangerous objects. In some aspects, the signal is a silent signal, such as an optical signal or a vibrational signal. A silent signal can be any signal that is not notable by an individual carrying or hiding an object of a preselected group of objects.

In some aspects, the method further comprises using one or more additional transmitters transmitting an EM/MW signal to said receiver. In some aspects, the method further comprises using one or more additional receivers receiving an EM/MW signal from one or more transmitters. In some aspects, one transmitter comprises an array of transmitting antennas. In some aspects, one receiver comprises an array of receiving antennas. In some aspects, one transmitter comprises an array of transmitting antennas and one receiver comprises an array of receiving antennas. In some aspects, each one transmitter corresponds to only one receiver and each receiver corresponds to only one transmitter.

In some aspects, the method is capable of detecting an object of an irregular shape. In some aspects, the method detects objects of regular shapes.

In some aspects, the object is detected in space and in time as it moves through the monitored area.

In some aspects, the object is optically transparent media. In some aspects, the object is optically non-transparent media.

A system for detecting objects in a monitored space, according to the methods described herein, is also disclosed.

BRIEF DESCRIPTION OF THE DRAWINGS

Fig. 1 shows an example of "free space" Fourier transform data.

Fig. 2 shows an example of Fourier transform data when there is a dielectric between a receiver and transmitter.

Fig. 3 shows an example of Fourier transform data when there is a conductor between a receiver and transmitter.

Fig. 4 shows an example of how a distribution map is created by the method described herein. Fig. 4A shows a scenario and map corresponding to no objects in the inspection field (i.e., between a receiver and transmitter). Fig. 4B shows a scenario and map corresponding to a dielectric object in the inspection field. Fig. 4C shows a scenario and map corresponding to a conductor object in the inspection field. Fig. 4D shows a scenario and map corresponding to both a dielectric and a conductor in the inspection field.

Fig. 5A shows an example of a configuration where one antenna array transmits signals and one receiving antenna receives the signals transmitted.

Fig. 5B shows an example of a configuration where one antenna array transmits signals and three receiving antennas receive the signals transmitted.

Fig. 5C shows an example of a configuration where one (transmitting) antenna array transmits signals and another (receiving) antenna array receives the signals.

Fig. 6 shows an example of a configuration where several transmitting and receiving antennas are placed in a circular or spherical manner about a field of inspection.

Fig. 7 shows an example of a configuration where two transmitting antenna arrays are placed opposite receiving antennas, and this MW-imaging mechanism is coupled with a video-imaging mechanism, to create a walk-through security portal for real-time inspection.

DETAILED DESCRIPTION OF THE PREFERRED EMBODIMENT

The present invention significantly enlarges application of the methods described above, particularly by detecting and locating objects of all types of shapes in space at a distance (i.e., standoff detection) and measuring a material's dielectric constant automatically and classifying objects in preselected group and in real time.

The method to determine the dielectric constant of a material comprises analysis of the amplitude and phase of a transmitted broadband quasi-coherent microwave radiation (the preferred frequency range is 8-18 GHz), which is transmitted through a monitored space. Advantages of the present invention include: (1) creation of a "dielectric permittivity map" of a space being monitored and, after automatic analysis, determination of a corresponding domain (i.e. a stored material value) with the same dielectric permittivity constant; (2) recording changes in the "dielectric permittivity map" in real time to measure the dielectric constant of a moving target (not only for detection, but also for surveillance of moving dielectric targets); (3) recording distribution of a dielectric constant (i) in space and (ii) in time; (4) determination of the dielectric constant of an object of irregular shape (i.e. any shape); (5) determination of the dielectric constant of optically transparent and non-transparent media.

According to the method described herein, inspection of an object located within a monitored area is based on analyzing the parameters of quasi-coherent microwave radiation transmitted through the monitored area. Such analysis allows for the dielectric constant, shape, and volume of an object carried on the body or in luggage to be determined.

The present method of determining the dielectric constant of an object is based on the effect of the lengthening of an optical path of electromagnetic radiation when it goes through a dielectric object. For example, if a dielectric object with a thickness (t) and a dielectric constant ($\varepsilon$), is placed between a receiver and a transmitter, wherein the receiver and transmitter are placed at a distance (L) from each other, the optical path will be equal to $(L + t^*(\sqrt{\varepsilon} - 1))$. One method to determine the lengthening of an optical path of electromagnetic radiation is the Fourier transformation, applying the values corresponding to the change of phase and amplitude of electromagnetic radiation through a field with a dielectric object in it, compared with the phase and amplitude for the same field with no objects in it (i.e. "free space").

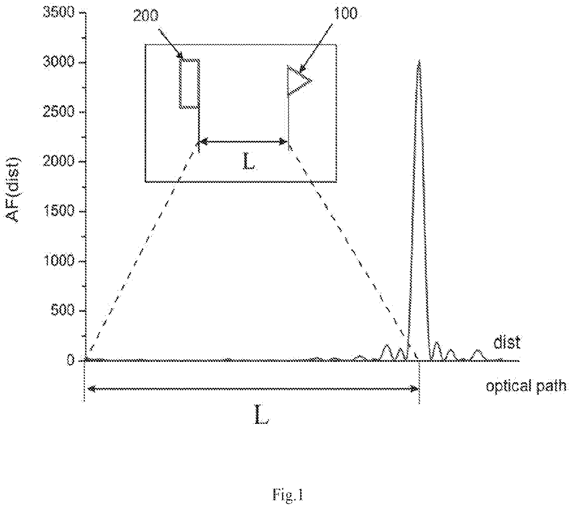

A Fourier transformation modulus, AF(dist), is expressed by a formula (not shown here), where "dist" is the variable of the AF(dist) distribution, as depicted in Figures 1-3 and further described in paragraph [0050].

The working equation comprises the following variables:

$$A_{otnj} = \frac{Amp_j}{Ampfree_j} = \text{relative amplitude}$$

, $j$ = frequency number; where

$Amp_j$ = amplitude of the received signal for the $j$-frequency transmitted through the inspected volume, $j$ = frequency number; and where

$Ampfree_j$ = amplitude in free space (i.e., no objects between receiver and transmitter), $j$ = frequency number;

$$Phase_{otnj} = \frac{(Phasefree_j - Phase_j) \cdot \pi}{180} = \text{relative phase for i-transmitter}$$

, $j$ frequency number; where

$Phase_j$ = operating signal phase for the signal transmitted through the inspected volume, $j$ = frequency number; and where

$Phasefree_j$ = phase in free space, $j$ = frequency number;

$Freq_j$ = frequency value; $j$ = frequency number;

$N_f$ = quantity of frequencies used; and

c = speed of light in vacuum.

The shift in a length of an optical path can be calculated from the AF(dist) distribution and equals the variable "dist" where the AF(dist) value is at its maximum. AF is an amplitude of the Fourier transform function, "dist" is the variable of AF(dist) distribution and can be considered as (axis "X" shifted at value L (optical length of free space)) in figures 1-3. In case of "free space" the shift in a length of an optical path is zero and the AF(dist) value has its maximum at dist = 0.

The method of the present invention comprises a method for detecting and analyzing an object in a monitored area, comprising: first emitting an electromagnetic/microwave (EM/MW) signal via one transmitter through the monitored area, thus transmitting said EM/MW signal through the monitored area, said signal transmitting through any object along a path directed towards one receiver located at a distance opposite of said one transmitter for receiving said signal, said receiver detecting an amplitude and a phase (i.e. complex amplitude) of a received EM/MW signal transmitted through the monitored area, said receiver further performing a first processing of said received signal to determine whether said amplitude is above a preset amplitude threshold, said receiver further performing a second processing of said received signal if said preset amplitude threshold is met, said second processing comprising determining a shift in a length of an optical path of said EM/MW signal, compared to an optical path of the same signal through free space, said shift occurring due to said EM/MW signal transmitting through said object, sending data regarding said shift to a processor, then measuring a thickness of said object (designated as $t$) using any method known in the art (e.g., using a set of video cameras positioned to view the space of the monitored area), and sending data regarding said thickness to said processor, wherein said processor further calculates a dielectric permittivity value ($\varepsilon$) of said object via a relationship of said shift equating to (t*($\sqrt{\varepsilon} - 1$)) , and said processor comparing said dielectric permittivity value to a database of reference dielectric permittivity values (this database forms preselected groups of objects which are deemed dangerous or non-dangerous, for example), in order to determine which preselected group of objects the monitored object belongs to and whether the object belongs to a preselected group of dangerous objects (i.e. is a dangerous object, e.g., because of a high dielectric permittivity value).

In some aspects, the shift in the length of the optical path may be calculated by a Fourier transform of the relation between a signal's complex amplitudes in the presence versus the absence of the object (the same signal going through free space) in the controlled/inspected area of space.

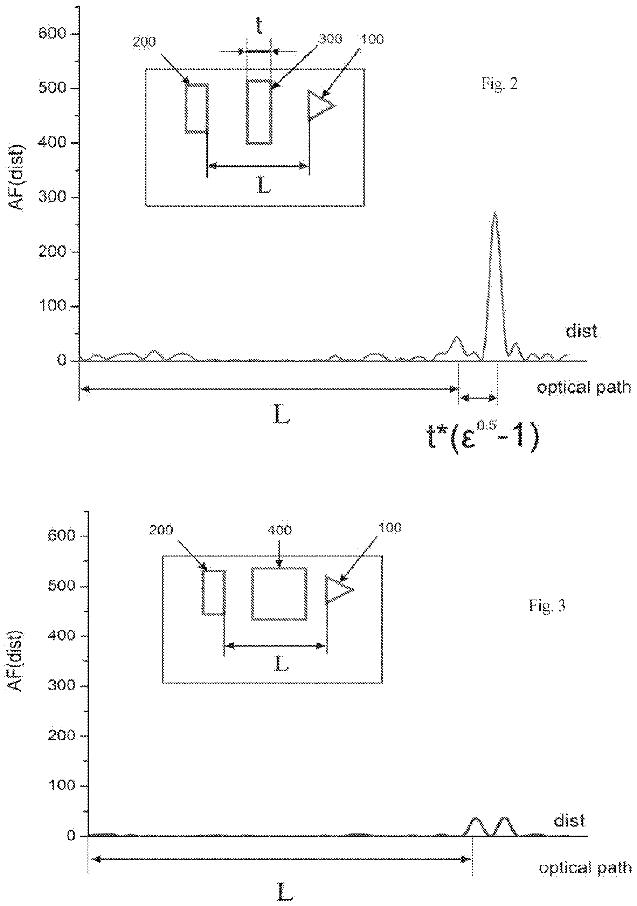

Figures 1, 2, and 3 show an example of the type of experimental data (frequency range 8-18 GHz) obtained by the Fourier transform method for free space (i.e., no object in the field between a transmitter **200** and a receiver **100**) (Fig. 1), a dielectric object **300** located between a transmitter **200** and a receiver **100** (Fig. 2), and a conducting object (i.e. conductor) **400** located between a transmitter **200** and a receiver **100** (Fig. 3). As shown in Figs. 2 and 3, a dielectric placed between the receiver and the transmitter causes a shift of the Fourier transform maximum at a distance related to the dielectric object's thickness (t) and its dielectric constant value ($\varepsilon$), the relationship and shift being equal to the value, t*($\varepsilon^{0.5}$ - 1). The amplitude of the function is also less than the amplitude measured in "free space" due to scattering and absorption in the dielectric object. Thus, by setting certain parameters for searching - e.g., a range of maximum shift and a range of corresponding amplitudes - it is determined whether a dielectric object is present or not present.

As shown in Figure 3, when there is a conductor between receiver and transmitter (e.g., a human body), the amplitude of the Fourier transform maximums is tens of times lower than that through free space. Thus, by setting an amplitude threshold, it is determined whether objects of a specific material are located in the monitored field. The preset amplitude threshold values also help to distinguish conductors from dielectrics.

The presently claimed method is also capable of creating a "space map" (or "distribution map") of dielectric permittivity value distribution. Due to the existence of an array of transmitting (or receiving) antennas-for example, an antenna array comprising many smaller elementary transmitters)-the Fourier transform is calculated separately for each such transmitter. Thus, a distribution of projections of dielectric constants for an interrogated object is built along the plane of an antenna array. By (1) reconstructing a distribution of the dielectric constant value of objects located in or moving through a monitored area and (2) distinguishing particular portions of that space where the dielectric constant values coincide to the dielectric constant values of real explosives or other dangerous objects, the method determines (1) if such objects exist and (2) where such objects exist. In general, any type of dielectric may be detected (not limited to explosives), depending on the sensitivity threshold, which can be present to any given value. The dielectric permittivity value of an object is determined by simultaneously measuring the phase and the amplitude of a microwave (MW) signal traveling through the monitored area and passing (i.e. transmitting) through a target moving through the area. A single source or multiple sources of MW radiation are used, and one receiver or multiple receivers of MW radiation are employed. In some embodiments, the source(s) of radiation generate(s) radiation at multiple frequencies.

A received signal (or signals) is (are) used to obtain information about changes in the length of an optical path. The microwave signal transmitted through an interrogated object such as, for example, a carried bag, is compared with a signal which travels the same distance without the bag in its way (i.e. the optical path's length in free space). In order to determine the change in the optical path length, the shift is measured between the maximal values of (1) the signal through the object (i.e. the converted signal, measureable using the Fourier transform formula above) and (2) the same signal when there is no object at all. Once the "shift" is measured, dielectric permittivity value may be determined from

$$\sqrt{\varepsilon} = \frac{shift}{t} + 1$$

equation , where t is the thickness of the object, and $\varepsilon$ is the dielectric permittivity value. Value t can be measured by various different instruments and other known methods in the art (e.g., but not limited to, video systems to obtain a corresponding stereo image).

The recognition of objects as potentially dangerous or benign according to their dielectric properties is based on the fact that all explosives, e.g. TNT, RDX, tetryl, etc., have a real-number coefficient of their dielectric permittivity ranging between 2.8 and 7. Everyday items that are not dangerous, e.g. plastics and books, however, have a dielectric permittivity value of no more than 2.5. Thus, by setting detection thresholds based on this information, it is possible to detect when an object of abnormal dielectric permittivity enters and moves through the monitored area.

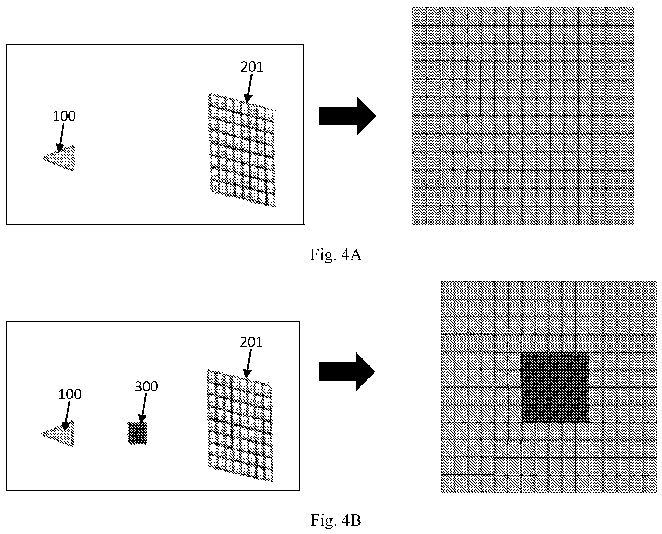

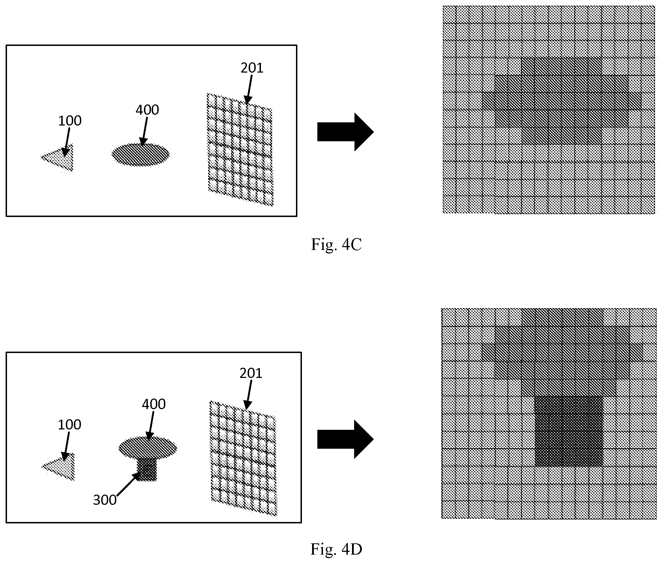

Fig. 4 illustrates an example of a model distribution for situations where, between a transmitter array **201** and a receiver **100** (note that either a receiver or a transmitter can comprise an array, although this example shows only a transmitter array), there is free space (Fig. 4A), there is a dielectric **300** (Fig. 4B), there is a conductor **400** (Fig. 4C), or there is both a dielectric **300** and a conductor **400** (Fig. 4D). Thus, according to the distribution of Fourier transform functions for different individual transmitters in the antenna array (e.g., quantity, how close the similar responses are, etc.), it is determined whether there is a dielectric (or other) object within the inspected area. Also in inspection area, the size of an object can be determined as well (e.g., by means of stereo video systems).

In the preferred embodiment of the present invention, the physical dimensions of the inspected object are required to be detected. To obtain this information, various additional technologies are coupled with the microwave imaging (i.e. Fourier transform) method described herein (e.g., video systems to obtain a corresponding stereo image). This combined method is integrated into various types of inspection systems used for detecting potentially dangerous objects on the human body (e.g., explosives). Together with the measurement of the optical path lengths geometric dimensions and shape of the inspected object are measured by constructing a 3D stereo optical image of the object using system of video cameras comprising a stereo video pair. Joint information about (1) dimensions of an object in a monitored area and (2) the value of the shift due to the lengthening of an optical path of electromagnetic waves of a chosen frequency range allows for the determination of the dielectric constant of the object. This value, together with measurements of geometric dimensions and shape analysis, is then used to determine the level of danger associated with the object by comparing in the object's characteristics with a database of reference characteristics of dangerous items including but not limited to explosive devices and explosive materials.

The proposed method can be used to determine the dielectric constant of different dielectric objects including but not limited to solids and liquids. One important condition under which the method operates is a low level of radiation absorption by the inspected object (this number preferably, and optimally, has a value of zero).

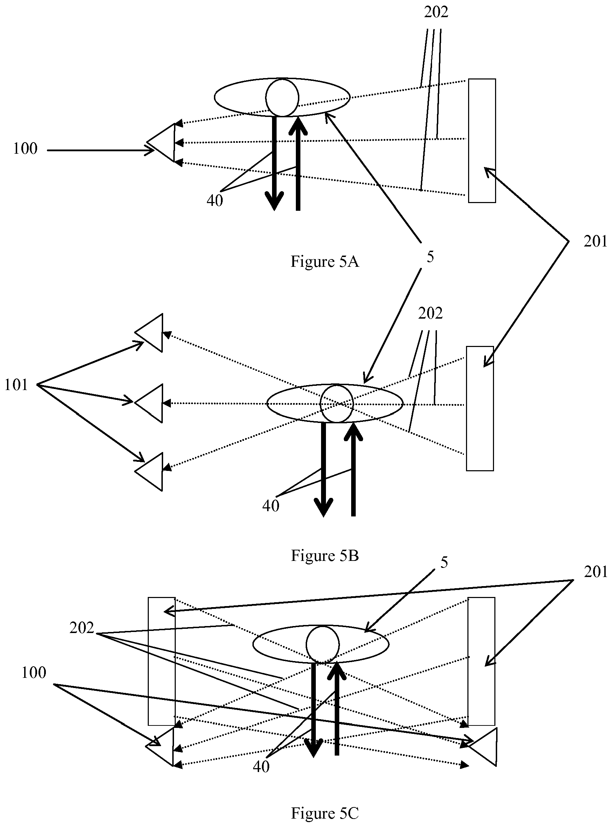

Figs. 5A-5C show examples of different configurations for the presently claimed method. A single transmitter **200** and a single receiver **100** can be employed, multiple transmitters **200** and/or receivers **100** can be employed, an array (or matrices) of transmitters **201** and/or an array (or matrices) of receivers **101** can be employed in various embodiments of the present invention. Fig. 5A specifically shows an array of transmitters (i.e. a transmitter array) **201** sending signals (e.g., electromagnetic, microwave, etc.) **202** to one receiver **100,** the signal transmitting through any individual and carried or hidden items **5** as the individual and items move through the monitored area in either direction **40.** Fig. **5B** specifically shows a transmitting array **201** sending signals **202** to an array of receivers (i.e. a receiver array) **101,** each signal transmitting through any individual and carried or hidden items **5** as the individual and items move through the monitored area in either direction **40.** Fig. 5C specifically shows transmitter arrays **201** located on opposite sides of a monitored area sending signals **202** to individual corresponding receivers **100** located at a distance opposite their corresponding transmitter arrays. Each signal transmits through any individual and carried or hidden items **5** as the individual and items move through the monitored area in either direction **40.**

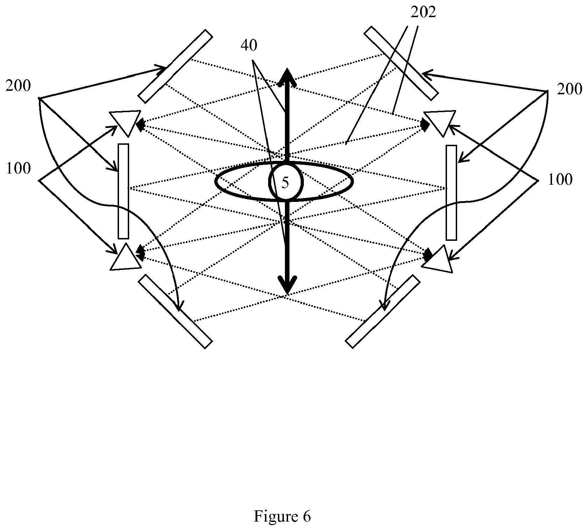

Fig. 6 shows a different embodiment (in the form of another configuration) of the presently claimed method. In this embodiment, transmitters **200** and receivers **100** are positioned in a circular (360 degree) fashion about a field of inspection, allowing for collection of signal data from different angles relative to a target. Such a design is potentially further developed into a 3-dimensional configuration of transmitters and receivers (i.e., spherical placement) to include even more angles for data collection. The transmitters and receivers may replace each other and the essence of the invention will remain the same. Each signal transmits through any individual and carried or hidden items **5** as the individual and items move through the monitored area in either direction **40.**

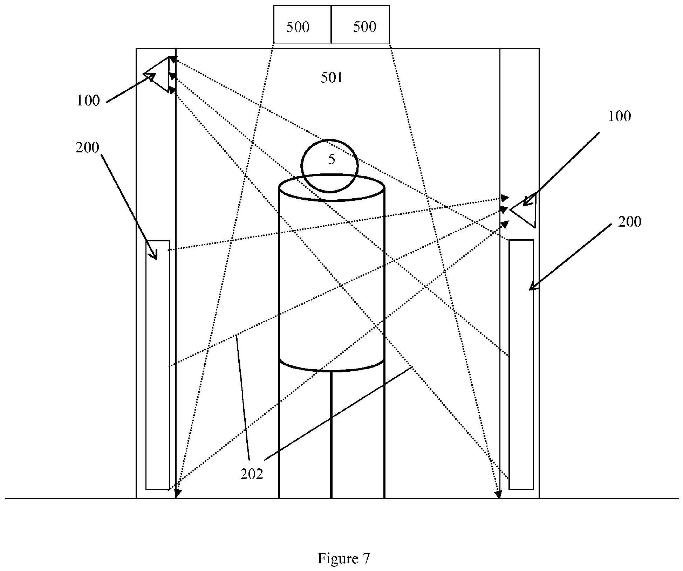

Fig. 7 details yet another embodiment and configuration of transmitters **200** and receivers **100**. In this embodiment, the inspection field is located in a portal through which inspected targets continuously move. Inspection is performed in real time as a person moves through the portal. This particular configuration comprises two transmitter arrays **201** (each array comprises, for example, 512 elements, wherein each element transmits its own wave/signal) placed at different sides of a portal, and two receiving antennas **100** placed across from, or opposite, the transmitting antenna array **201** in a manner such that the inspection zone is made as large as possible (e.g. various angles for capturing different viewpoints based on such angles of wave propagation). The configuration of this particular embodiment further comprises a pair of stereo video cameras **500,** which are placed between the two transmitting antenna arrays **201.** The video cameras **500** create an additional monitoring angle (or view) **501** and allow for further measurements and calculations to be made on inspected objects, for example, they may be used as the method for measuring the thickness (t) of the object. The inspection procedure occurs as an individual carrying items **5** passes the monitored area between the two transmitting antenna arrays **201.** Each signal transmits through any individual and carried or hidden items **5** as the individual and items move through the monitored area in either direction **40.** As the target moves through the portal, the data from all receiving antennas/receivers **100** is transmitted to a processing unit (in some embodiments, the receiver itself contains a processing unit), which, in real time, makes a decision about the danger level of the target by comparing the calculated dielectric constants to a database of stored values, each of the value corresponding to specific known materials. The processing unit then sends an alarm signal to security officers if any such values correspond to dangerous materials, signaling that a risk exists. The processing unit may also be capable of sending a confirmation signal which would indicate that the object belongs to another preselected group of objects that may or may not be dangerous.

The present invention also comprises a system for detection of dangerous materials with units employing the steps of the method described above. Specifically, the system comprises a system for detecting an object belonging to one or more preselected groups of dangerous and non-dangerous objects in a monitored area, comprising: a transmitting antenna adapted to transmit an EM/MW signal through the monitored area and any object in said signal's path, a receiving antenna adapted to receive information regarding said signal after said signal transmits through the monitored area and any object in said signal's path, an instrument which can provide data on thickness of said object, and a processing unit adapted to determine an amplitude and a phase of said signal, determine whether said amplitude and phase meet a preset amplitude and phase threshold, determine a shift in an optical path length of said signal, determine the thickness of said object in the monitored area, determine a dielectric permittivity value of said object, and compare said dielectric permittivity value with a stored database of reference values to determine if a preselected object exists in the monitored area when the object's dielectric permittivity value matches that of one or more of the preselected groups of dangerous and non-dangerous objects.

In some aspects, the system comprises a processing unit adapted to determine a shift in an optical length of said signal by using a Fourier transformation modulus, relating and comparing the signal's complex amplitudes (i.e. amplitude and phase) in the presence of the object in the controlled/inspected/monitored area of space versus the signal's complex amplitudes in the absence of the object in the controlled area of space. In certain aspects, the system comprises a processing unit adapted to determine a dielectric permittivity value of the object which comprises equating the shift of optical path length to the value, $t^*(\sqrt{\varepsilon} - 1)$ , where t is the thickness of the object, and $\varepsilon$ is the dielectric permittivity value.

The field characteristics of a transmitting antenna used in the presently claimed method are tens to hundreds of times lower than the permitted threshold values determined by health standards, and thus are also harmless to the public's health.

**Claims**

1. A method for detecting and analyzing an object in a monitored area, comprising:

   emitting an electromagnetic/microwave, EM/MW, signal via at least one transmitter (200) through the monitored area, said signal transmitting through any object along a path directed towards at least one receiver (100) located at a distance opposite of said one transmitter (200) for receiving said signal, said path having an optical path length,
   said receiver (100) detecting an amplitude and a phase as a complex amplitude of a received EM/MW signal transmitted through the monitored area,
   said receiver (100) further performing a first processing of said received signal to determine whether said amplitude is above a preset amplitude threshold,
   said receiver (100) further performing a second processing of said received signal if said preset amplitude threshold is met, said second processing comprising determining a shift in the optical path length due to said EM/MW signal transmitting through said object, compared to the optical path length when the same signal is emitted through a free space in the absence of said object within the monitored area,
   wherein the shift in the optical path length is calculated by a Fourier transform of a relation between the signal's complex amplitude in the presence of the object within the monitored area and the signal's complex amplitude in the absence of the object within the monitored area,
   sending data regarding said shift to a processor,
   measuring a thickness t of said object and sending data regarding said thickness to said processor, said processor further calculating a dielectric permittivity value $\varepsilon$ of said object via a relationship of said shift equating to $t*(\sqrt{\varepsilon}-1)$, said processor comparing said dielectric permittivity value to a database of reference dielectric permittivity values forming preselected groups of objects, so as to determine to which preselected group of objects the object belongs and whether the object belongs to a preselected group of dangerous objects.

2. The method of claim 1, further comprising combining a plurality of EM/MW signals to form a real time distribution map of dielectric permittivity value data.

3. The method of claim 1 or 2, further comprising sending a confirmation or alarm signal in the presence of an object belonging to a particular preselected group of dangerous or non-dangerous objects.

4. The method of claim 3, wherein said signal is a silent signal.

5. The method of any of claims 1-4, further comprising one or more additional transmitters (200) transmitting an EM/MW signal to said receiver (100).

6. The method of any of claims 1-5, further comprising one or more additional receivers (100) receiving an EM/MW signal from said one transmitter (200).

7. The method of any of claims 1-6, wherein said one transmitter (200) comprises an array of transmitting antennas (201).

8. The method of any of claims 1-7, wherein said one receiver (100) comprises an array of receiving antennas (101).

9. The method of any of claims 1-8, further comprising one or more additional transmitters (200) and one or more additional receivers (100), wherein each transmitter (200) corresponds to only one receiver (100) and each receiver (100) corresponds to only one transmitter (200).

10. The method of any of claims 1-9, wherein said object is an irregularly shaped object.

11. The method of any of claims 1-10, wherein said object is detected in space and in time as it moves through the monitored area.

**12.** The method of any of claims 1-11, wherein said object is an optically transparent media.

**13.** The method of any of claims 1-12, wherein said object is an optically non-transparent media.

**14.** A system for detecting an object belonging to one or more preselected groups of dangerous and non-dangerous objects in a monitored area, comprising:

a transmitting antenna adapted to transmit an electromagnetic/microwave, EM/MW, signal through the monitored area and any object in said signal's path, signal's path having an optical path length,
a receiving antenna adapted to receive information regarding said signal after said signal transmits through the monitored area and any object in said signal's path, an instrument which provides data on a thickness t of said object,
a processing unit adapted to determine an amplitude and a phase as a complex amplitude of said signal, determine whether said amplitude and phase are above a preset amplitude and phase threshold, and if said preset threshold is met, determine a shift in the optical path length of said signal,
wherein the processing unit is adapted to determine the shift in the optical path length by a Fourier transformation modulus comparing the signal's amplitude and phase in the presence of the object within the monitored area and the signal's amplitude and phase in the absence of the object within the monitored area, determine the thickness t of said object in the monitored area, determine a dielectric permittivity value $\varepsilon$ of said object which comprises equating the shift in the optical path length to $t*((\sqrt{\varepsilon})-1)$ , and compare said dielectric permittivity value with a stored database of reference values to determine if a preselected object exists in the monitored area when the object's dielectric permittivity value matches that of one or more preselected groups of dangerous and non-dangerous objects.

**Patentansprüche**

**1.** Verfahren zum Erfassen und Analysieren eines Objektes in einem überwachten Gebiet, umfassend:

Aussenden eines elektromagnetischen/Mikrowellen-, EM/MW-, -Signals über mindestens einen Sender (200) durch das überwachte Gebiet, wobei das Signal durch ein Objekt entlang eines Weges, ausgerichtet in Richtung mindestens eines Empfängers (100), gesendet wird, der sich in einem Abstand gegenüber dem einen Sender (200) zum Empfangen des Signals befindet, wobei der Weg eine optische Weglänge hat,
wobei der Empfänger (100) eine Amplitude und eine Phase als eine komplexe Amplitude eines empfangenen EM/MW-Signals erfasst, das durch das überwachte Gebiet gesendet wurde,
wobei der Empfänger (100) ferner eine erste Verarbeitung des empfangenen Signals vornimmt, um zu bestimmen, ob die Amplitude über einer voreingestellten Amplitudenschwelle liegt,
wobei der Empfänger (100) ferner eine zweite Verarbeitung des empfangenen Signals vornimmt, wenn die voreingestellte Amplitudenschwelle erreicht ist, wobei die zweite Verarbeitung das Bestimmen einer Verschiebung der optischen Weglänge aufgrund des EM/MW-Signals, das durch das Objekt gesendet wird, im Vergleich zu der optischen Weglänge, wenn dasselbe Signal durch einen freien Raum ohne die Anwesenheit des Objektes innerhalb des überwachten Gebietes ausgesendet wird, umfasst,
wobei die Verschiebung der optischen Weglänge durch eine Fourier-Transformation einer Beziehung zwischen der komplexen Amplitude des Signals in der Anwesenheit des Objektes innerhalb des überwachten Gebietes und der komplexen Amplitude des Signals ohne die Anwesenheit des Objektes innerhalb des überwachten Gebietes berechnet wird,
Senden von Daten bezüglich der Verschiebung an einen Prozessor,
Messen einer Dicke t des Objektes und
Senden von Daten bezüglich der Dicke an den Prozessor, wobei der Prozessor ferner einen Wert der Dielektrizitätskonstante $\varepsilon$ von dem Objekt über eine Beziehung der Verschiebung, die $t*(\sqrt{\varepsilon}-1)$ entspricht, berechnet, wobei der Prozessor den Wert der Dielektrizitätskonstante mit einer Datenbank von Referenzwerten von Dielektrizitätskonstanten vergleicht, die vorausgewählte Gruppen von Objekten bilden, um so zu bestimmen, zu welcher vorausgewählten Gruppe von Objekten das Objekt gehört und ob das Objekt zu einer vorausgewählten Gruppe gefährlicher Objekte gehört.

**2.** Verfahren nach Anspruch 1, ferner umfassend das Kombinieren einer Vielzahl von EM/MW-Signalen unter Bildung einer Echtzeitverteilungskarte von Daten zum Wert der Dielektrizitätskonstante.

3. Verfahren nach Anspruch 1 oder 2, ferner umfassend das Senden eines Bestätigungs- oder Alarmsignals in der Anwesenheit eines Objektes, das zu einer bestimmten vorausgewählten Gruppe gefährlicher oder nicht gefährlicher Objekte gehört.

4. Verfahren nach Anspruch 3, wobei das Signal ein stilles Signal ist.

5. Verfahren nach einem der Ansprüche 1 - 4, ferner umfassend einen oder mehrere zusätzliche(n) Sender (200), der/die ein EM/MW-Signal an den Empfänger (100) sendet/senden.

6. Verfahren nach einem der Ansprüche 1 - 5, ferner umfassend einen oder mehrere zusätzliche(n) Empfänger (100), der/die ein EM/MW-Signal von dem einen Sender (200) empfängt/empfangen.

7. Verfahren nach einem der Ansprüche 1 - 6, wobei der eine Sender (200) eine Gruppe von Sendeantennen (201) umfasst.

8. Verfahren nach einem der Ansprüche 1 - 7, wobei der eine Empfänger (100) eine Gruppe von Empfangsantennen (101) umfasst.

9. Verfahren nach einem der Ansprüche 1 - 8, ferner umfassend einen oder mehrere zusätzliche(n) Sender (200) und einen oder mehrere zusätzliche(n) Empfänger (100), wobei jeder Sender (200) nur zu einem Empfänger (100) gehört und jeder Empfänger (100) nur zu einem Sender (200) gehört.

10. Verfahren nach einem der Ansprüche 1 - 9, wobei das Objekt ein unregelmäßig geformtes Objekt ist.

11. Verfahren nach einem der Ansprüche 1 - 10, wobei das Objekt in Raum und Zeit erfasst wird, wenn es sich durch das überwachte Gebiet bewegt.

12. Verfahren nach einem der Ansprüche 1 - 11, wobei das Objekt ein optisch transparentes Medium ist.

13. Verfahren nach einem der Ansprüche 1 - 12, wobei das Objekt ein optisch nicht transparentes Medium ist.

14. System zum Erfassen eines Objektes, das zu einer oder mehreren vorausgewählten Gruppe(n) gefährlicher und nicht gefährlicher Objekte in einem überwachten Gebiet gehört, umfassend:

eine Sendeantenne, die dafür ausgelegt ist, ein elektromagnetisches/Mikrowellen-, EM/MW-, -Signal durch das überwachte Gebiet und ein Objekt im Weg des Signals zu senden, wobei der Weg des Signals eine optische Weglänge hat,
eine Empfangsantenne, die dafür ausgelegt ist, Informationen bezüglich des Signals zu empfangen, nachdem das Signal durch das überwachte Gebiet und ein Objekt in dem Weg des Signals gesendet wurde,
ein Instrument, das Daten zur Dicke t des Objektes bereitstellt,
eine Verarbeitungseinheit, die dafür ausgelegt ist, eine Amplitude und eine Phase als eine komplexe Amplitude des Signals zu bestimmen, zu bestimmen, ob die Amplitude und Phase über einer voreingestellten Amplituden- und Phasenschwelle liegen und, wenn die voreingestellte Schwelle erreicht ist, eine Verschiebung der optischen Weglänge des Signals zu bestimmen,
wobei die Verarbeitungseinheit dafür ausgelegt ist, die Verschiebung der optischen Weglänge des Signals durch ein Fourier-Transformationsmodul zu bestimmen, das die Amplitude und Phase des Signals in der Anwesenheit des Objektes innerhalb des überwachten Gebietes und die Amplitude und Phase des Signals ohne die Anwesenheit des Objektes innerhalb des überwachten Gebietes vergleicht, die Dicke t des Objektes in dem überwachten Gebiet zu bestimmen, einen Wert der Dielektrizitätskonstante $\varepsilon$ des Objektes zu bestimmen, was das Gleichsetzen der Verschiebung der optischen Weglänge mit $t^{*}((\sqrt{\varepsilon}) - 1)$ umfasst, und den Wert der Dielektrizitätskonstante mit einer gespeicherten Datenbank von Referenzwerten zu vergleichen, um zu bestimmen, ob ein vorausgewähltes Objekt in dem überwachten Gebiet existiert, wenn der Wert der Dielektrizitätskonstante des Objektes dem von einer oder mehreren vorausgewählten Gruppen gefährlicher und nicht gefährlicher Objekte entspricht.

**Revendications**

1. Procédé de détection et d'analyse d'un objet dans une zone surveillée, comprenant les étapes consistant à :

   émettre un signal électromagnétique/micro-onde, EM/MW, via au moins un émetteur (200) à travers la zone surveillée, ledit signal se transmettant à travers tout objet le long d'un chemin dirigé vers au moins un récepteur (100) situé à une distance opposée audit émetteur (200) pour recevoir ledit signal, ledit chemin ayant une longueur de trajet optique,
   ledit récepteur (100) détectant une amplitude et une phase sous la forme d'une amplitude complexe d'un signal EM/MW reçu transmis à travers la zone surveillée,
   ledit récepteur (100) effectuant en outre un premier traitement dudit signal reçu pour déterminer si ladite amplitude est supérieure à un seuil d'amplitude prédéfini,
   ledit récepteur (100) effectuant en outre un second traitement dudit signal reçu si ledit seuil d'amplitude prédéfini est atteint, ledit second traitement comprenant la détermination d'un décalage de la longueur de trajet optique dû audit signal EM/MW transmis à travers ledit objet, comparé à la longueur de trajet optique lorsque le même signal est émis à travers un espace libre en l'absence dudit objet dans la zone surveillée,
   dans lequel le décalage de la longueur de trajet optique est calculé par une transformation de Fourier d'une relation entre l'amplitude complexe du signal en présence de l'objet dans la zone surveillée et l'amplitude complexe du signal en l'absence de l'objet dans la zone surveillée,
   envoyer des données concernant ledit décalage à un processeur,
   mesurer une épaisseur dudit objet et envoyer des données concernant ladite épaisseur audit processeur, ledit processeur calculant en outre une valeur de permittivité diélectrique ε dudit objet via une relation dudit décalage égale à $t \times (\sqrt{\varepsilon} - 1)$, ledit processeur comparant ladite valeur de permittivité diélectrique à une base de données de valeurs de permittivité diélectrique de référence formant des groupes présélectionnés d'objets, de manière à déterminer à quel groupe présélectionné d'objets l'objet appartient et si l'objet appartient à un groupe présélectionné d'objets dangereux.

2. Procédé selon la revendication 1, comprenant en outre la combinaison d'une pluralité de signaux EM/MW pour former une carte de distribution en temps réel de données de valeur de permittivité diélectrique.

3. Procédé selon la revendication 1 ou 2, comprenant en outre l'envoi d'un signal de confirmation ou d'alarme en présence d'un objet appartenant à un groupe présélectionné particulier d'objets dangereux ou non dangereux.

4. Procédé selon la revendication 3, dans lequel ledit signal est un signal silencieux.

5. Procédé selon l'une quelconque des revendications 1 à 4, comprenant en outre un ou plusieurs émetteurs supplémentaires (200) transmettant un signal EM/MW audit récepteur (100).

6. Procédé selon l'une quelconque des revendications 1 à 5, comprenant en outre un ou plusieurs récepteurs supplémentaires (100) recevant un signal EM/MW dudit un émetteur (200).

7. Procédé selon l'une quelconque des revendications 1 à 6, dans lequel ledit un émetteur (200) comprend un réseau d'antennes d'émission (201).

8. Procédé selon l'une quelconque des revendications 1 à 7, dans lequel ledit récepteur (100) comprend un réseau d'antennes de réception (101).

9. Procédé selon l'une quelconque des revendications 1 à 8, comprenant en outre un ou plusieurs émetteurs supplémentaires (200) et un ou plusieurs récepteurs supplémentaires (100), dans lequel chaque émetteur (200) correspond à un seul récepteur (100) et chaque récepteur (100) correspond à un seul émetteur (200).

10. Procédé selon l'une quelconque des revendications 1 à 9, dans lequel ledit objet est un objet de forme irrégulière.

11. Procédé selon l'une quelconque des revendications 1 à 10, dans lequel ledit objet est détecté dans l'espace et dans le temps lorsqu'il se déplace dans la zone surveillée.

12. Procédé selon l'une quelconque des revendications 1 à 11, dans lequel ledit objet est un support optiquement transparent.

13. Procédé selon l'une quelconque des revendications 1 à 12, dans lequel ledit objet est un support optiquement non transparent.

14. Système pour détecter un objet appartenant à un ou plusieurs groupes présélectionnés d'objets dangereux et non dangereux dans une zone surveillée, comprenant :

une antenne d'émission adaptée pour émettre un signal électromagnétique/micro-onde, EM/MW, à travers la zone surveillée et tout objet se trouvant sur le trajet dudit signal, ledit trajet du signal ayant une longueur de trajet optique,
une antenne de réception adaptée pour recevoir des informations concernant ledit signal après que ledit signal a été transmis à travers la zone surveillée et tout objet dans le chemin dudit signal,
un instrument qui fournit des données sur l'épaisseur dudit objet,
une unité de traitement adaptée pour déterminer une amplitude et une phase en tant qu'amplitude complexe dudit signal, déterminer si ladite amplitude et ladite phase sont supérieures à un seuil d'amplitude et de phase prédéfini, et si ledit seuil prédéfini est atteint, déterminer un décalage de la longueur de trajet optique dudit signal, dans lequel l'unité de traitement est adaptée pour déterminer le décalage de la longueur de trajet optique par un module de transformation de Fourier comparant l'amplitude et la phase du signal en présence de l'objet dans la zone surveillée et l'amplitude et la phase du signal en l'absence de l'objet dans la zone surveillée, déterminer l'épaisseur dudit objet dans la zone surveillée, déterminer une valeur de permittivité diélectrique $\varepsilon$ dudit objet qui comprend l'assimilation du décalage de la longueur de trajet optique à $t \times (\sqrt{\varepsilon} - 1)$, et comparer ladite valeur de permittivité diélectrique à une base de données stockée de valeurs de référence pour déterminer si un objet présélectionné existe dans la zone surveillée lorsque la valeur de permittivité diélectrique de l'objet correspond à celle d'un ou plusieurs groupes présélectionnés d'objets dangereux et non dangereux.

Fig.1

Fig. 2

Fig. 3

14

Fig. 4A

Fig. 4B

Fig. 4C

Fig. 4D

Figure 5A

Figure 5B

Figure 5C

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130033574 A1

- RU 2418269